# EUROPÄISCHE PATENTANMELDUNG

(11) **EP 0 668 414 A1**
(43) Veröffentlichungstag der Anmeldung: **23.08.1995**
(21) Anmeldenummer: 95101869.6
(22) Anmeldetag: 11.02.1995
(51) Int. Cl.: E04D 1/36, E04D 13/17

(54) **Lüfterkappe**

(30) Priorität: 18.02.1994 DE 4405201; 24.03.1994 DE 4410199
(71) Anmelder: NORM A.M.C. AG, CH-6472 Erstfeld/Kt. Uri (CH)
(72) Erfinder: Müller, Manfred, D-84166 Adlkofen (DE); Gödl, Fritz, CH-6373 Ennetbürgen (CH)
(74) Vertreter: Gesthuysen, von Rohr & Weidener

(57) **Zusammenfassung**

Die Erfindung betrifft eine Lüfterkappe (1) zur Hinterlüftung von Dächern im First-, Walm- oder Gratbereich, mit einem - vorzugsweise aus Kunststoff bestehenden - Lüfterkappenkörper (2) und einem Abdichtorgan (9), wobei das Abdichtorgan (9) eine im Querschnitt etwa keilartige Form hat und einen aus Schaumkunststoff bestehenden Abdichtorgankörper (10) aufweist.

Zur Verbesserung der Dichteigenschaften und zur Erhöhung der Lebensdauer des Abdichtorgans (9) ist erfindungsgemäß vorgesehen, daß der Abdichtorgankörper (10) auf wenigstens einer seiner freien Oberflächen (11, 12), vorzugsweise auf der außenliegenden Oberfläche (11), eine im wesentlichen porenfreie und die Oberfläche (11, 12) etwa ganzflächig bedeckende Außenhaut (14) aufweist, die aus einer Strukturveränderung der Oberfläche (11, 12) des Abdichtorgankörpers (10) entstanden ist, aus dem gleichen Kunststoff besteht wie der Abdichtorgankörper (10) und fest mit dem Abdichtorgankörper (10) verbunden ist.

## Beschreibung

Die Erfindung betrifft eine Lüfterkappe zur Hinterlüftung von Dächern im First-, Walm- oder Gratbereich, mit einen, - vorzugsweise aus Kunststoff bestehenden - Lüfterkappenkörper und einem Abdichtorgan, wobei das Abdichtorgan eine im Querschnitt etwa keilartige Form hat und einen aus Schaumkunststoff bestehenden Abdichtorgankörper aufweist. Weiterhin betrifft die Erfindung ein Abdichtorgan der genannten Art sowie ein Verfahren zur Herstellung einerseits einer Lüfterkappe, andererseits eines Abdichtorgans.

Lüfterkappen sind seit geraumer Zeit bekannt. Sie werden im First-, Walm- oder Gratbereich eines Daches angeordnet, um mögliche Schädigungen durch Feuchtebildung zu verhindern. Mit Hilfe der Lüfterkappe, deren Lüfterkappenkörper Luftdurchtrittsöffnungen aufweisen, wird bei entsprechender Anströmung ein Unterdruck unterhalb der Lüfterkappe erzeugt, der zu einer Belüftung des Dachraumes führt. Aufgrund dieser Funktion werden die genannten Lüfterkappen auch als Sauglüfterkappen bezeichnet.

Um eine wirksame Hinterlüftung im Dachbereich zu gewährleisten, ist eine gute Abdichtung zwischen dem Dach einerseits und den Lüfterkappen andererseits erforderlich. Zu diesem Zweck werden keilartige Abdichtorgane verwendet, die einen aus Schaumkunststoff bestehenden Abdichtorgankörper aufweisen. Derartige Abdichtorgane, die auch als Dichtschaumkeile oder Filterschaumkeile bezeichnet werden, sind bereits aus den DE - U - 84 16 540, DE - U - 85 27 095, DE - A - 35 11 798, DE - C - 36 15 015, DE - U - 87 12 892, DE - U - 87 13 110, DE-U-8717115, DE-A-38 06 683, DE - A - 38 12 305, DE - A - 38 36 334 und DE - U -89 14 943 bekannt.

Lüfterkappen der genannten Art werden in der Regel mittig auf dem Firstbalken eines Daches befestigt. Die keilförmigen Abdichtorgane, die aufgrund ihres aus Schaumkunststoff bestehenden Abdichtorgankörpers eine hohe Flexibilität aufweisen, werden mit ihren Spitzen gegen die Dacheindeckung gedrückt, was dann zu der erwähnten Abdichtung führt. Werden die Lüfterkappen nun an- bzw. überströmt, ergibt sich, wie erwähnt, ein Unterdruck im Firstbereich des Daches.

Die Lüfterkappenkörper der bekannten Lüfterkappen werden üblicherweise durch Extrudieren oder durch Spritzgießen hergestellt. Beim Extrudieren ist noch eine Nachbehandlung zur Ausbildung der konkreten Form des Lüfterkappenkörpers erforderlich, was beim diskontinuierlichen Spritzgießen nicht notwendig ist.

Die einen Abdichtorgankörper aus Schaumkunststoff aufweisenden Abdichtorgane werden in der Regel durch Extrudieren hergestellt. Dabei erfolgt die Verschäumung des verwendeten Kunststoffs mit Hilfe eines Blähmittels normalerweise beim Verlassen des Extrusionswerkzeugs. Bein, Extrudieren werden kontinuierlich relativ lange Schaumstoffplatten großer Breite und vergleichsweise geringer Dicke hergestellt. Diese Formkörper haben in der Regel eine geringe Maßhaltigkeit. Beim anschließenden Abkühlen des extrudierten Formkörpers kann dieser an verschiedenen Stellen zusammenfallen, was die Folge der Kondensation des Blähmittels an diesen Stellen ist. Die Kondensation des Blähmittels ist unerwünscht, da sie zu einer welligen Oberfläche des Formkörpers führt und den ohnehin in vergleichsweise großer Menge anfallenden Verschnitt weiter erhöht. Dieser ergibt sich daraus, daß aus dem fertig geschäumten Formkörper anschließend keilförmige Abdichtorgane vergleichsweise hoher Maßhaltigkeit herausgeschnitten werden.

Die in Keilform geschnittenen Abdichtorgane werden zur Fertigstellung der Lüfterkappen jeweils mit der Unterseite der Lüfterkappenkörper verklebt. Da die Lüfterkappen in der Regel eine nach unten gewölbte Form haben, sind die Abdichtorgane im eingebauten Zustand der Lüfterkappen in der Regel kaum sichtbar. Dennoch ist die außenseitige Oberfläche der Abdichtorgane der Witterung und UV-Strahlung ausgesetzt. Dies kann nach einiger Zeit zu einer Beschädigung des Schaumkunststoffs und daher zu Undichtigkeiten des Abdichtorgans führen. Aufgrund der Undichtigkeiten vermindert sich die Dichtwirkung der Abdichtorgane, was nicht nur mit einer schlechteren Entlüftung verbunden ist. Über die Leckstellen kann auch Feuchtigkeit in den Dachinnenraum gelangen.

Die Erfindung geht nun einen neuen Weg. Erfindungsgemäß ist nämlich vorgesehen, daß der Abdichtorgankörper auf wenigstens einer seiner freien Oberflächen, vorzugsweise auf der außenseitigen Oberfläche, eine im wesentlichen porenfreie und die Oberfläche etwa ganzflächig bedeckende Außenhaut aufweist. Durch die porenfreie Außenhaut wird zunächst einmal der mögliche Eintrieb von Feuchtigkeit über den porösen Schaumkunststoff des Abdichtorgankörpers verhindert. Es versteht sich, daß eine porenfreie Außenhaut selbstverständlich wesentlich besser abdichtet als ein Schaumkunststoff an sich. Die bessere Dichtigkeit resultiert wiederum in erheblichen verbesserten Unterdruckwerten, die im Dachraum erzielt werden. Außerdem ist, was erfindungsgemäß festgestellt wurde, die UV-Beständigkeit des Abdichtorgans erheblich höher, wenn die UV-Strahlung auf die Außenhaut und nicht auf den Schaumkunststoff an sich wirkt. Weiterhin ist erfindungsgemäß vorgesehen, daß die Außenhaut aus einer Strukturveränderung der Oberfläche des Abdichtorgankörpers, also des Schaumkunststoffes entstanden ist, aus dem gleichen Kunststoff besteht wie der Abdichtorgankörper und fest mit diesem verbunden ist. Im Gegensatz zu einer nachträglich aufgebrachten Schutzschicht, die grundsätzlich ebenfalls möglich ist, hat die erfindungsgemäß vorliegende, sogenannte stoffschlüssige Verbindung der Außenhaut mit dem Abdichtorgankörper den Vorteil, daß eine unerwünschte bzw. unbeabsichtigte Ablösung der Außenhaut nicht auftreten kann. Insgesamt wird also dadurch, daß der Abdichtorgankörper und die Außenhaut ganzflächig eine Einheit aus dem gleichen Werkstoff bilden, die Lebensdauer des Abdichtorgans wesentlich erhöht und außerdem eine verbesserte Lüftungsfunktion gewährleistet.

Im Stand der Technik sind die Abdichtorgane an die Lüfterkappenkörper angeklebt. Auch bei der zuvor beschriebenen erfindungsgemäßen Lüfterkappe bzw. bei dem zuvor beschriebenen erfindungsgemäßen Abdichtorgan kann eine solche Befestigung des Abdichtorgans am Lüfterkappenkörper verwirklicht werden. Nach einer weiteren Lehre der Erfindung, die auch dann realisiert werden kann, wenn die Lüfterkappe bzw. das Abdichtorgan nicht in der zuvor beschriebenen Weise ausgeführt sind, ist das Abdichtorgan lösbar mit dem Lüfterkappenkörper verbindbar. Der Vorteilhaftigkeit dieser lösbaren Verbindbarkeit liegt die Erkenntnis zugrunde, daß Fehlfunktionen bei Lüfterkappen mit keilförmigen Abdichtorganen nicht auf den Lüfterkappenkörper zurückzuführen sind, sondern nur auf das Abdichtorgan. Der Vorteil der lösbaren Verbindung des Abdichtorgans mit dem Lüfterkappenkörper besteht darin, daß bei einer Beschädigung des Abdichtorgans nicht, wie bisher, die gesamt Lüfterkappe erneuert werden muß, sondern lediglich das Abdichtorgan, was aufgrund der lösbaren Befestigung problemlos möglich ist.

Erfindungsgemäß ist bei dem eingangs genannten Verfahren zur Herstellung des Abdichtorgans vorgesehen, daß Kunststoff und Blähmittel als Formmasse in eine Herstellungsform eingebracht, vorzugsweise eingespritzt, werden, eine Verschäumung unter Bildung von Schaumkunststoff erfolgt und mindestens eine Formwand der Herstellungsform derart gekühlt wird, daß das Blähmittel an der gekühlten Formwand kondensiert und sich auf der an der gekühlten Formwand anliegenden Oberfläche des geschäumten Formkörpers eine im wesentlichen geschlossene und sich über die gekühlte Formwand des Formkörpers ganzflächig erstrekkende Außenhaut bildet. Im Gegensatz zum Stand der Technik wird bei dem erfindungsgemäßen Verfahren also ganz gezielt gekühlt, und zwar mit dem Ziel, die erwünschte Außenhaut zu erhalten. Durch die gezielte und gleichmäßige Kühlung, die ganzflächig erfolgt, wird das Entstehen unerwünschter vereinzelter Kondensationsnester von Blähmittel verhindert.

Durch eine entsprechend gewählte Kühlung der Formwand in Abhängigkeit vom verwendeten Kunststoff und Blähmittel kann die gewünschte Dikke der Außenhaut eingestellt werden. Außerdem kann, wenn die Herstellungsform im Querschnitt eine Keilform hat, direkt ein keilförmiges Abdichtorgan hergestellt werden, ohne daß nach dem Herstellen des Formkörpers ein Schneiden überhaupt erforderlich ist. Statt einer im Querschnitt keilförmigen Herstellungsform kann auch eine im Querschnitt etwa rechteckige Herstellungsform verwendet werden, wobei wenigstens zwei gegenüberliegende Formwände in der genannten Art und Weise gekühlt werden. An den gekühlten Formwänden entstehen jeweils ganzflächig auf dem Formkörper Außenhäute. In einem einzigen nachgeordneten Schneidevorgang kann der dabei hergestellte rechteckige Formkörper über einen Diagonalschnitt in zwei Abdichtorgane geteilt werden. Insgesamt kann durch das erfindungsgemäße Verfahren die Herstellung von Abdichtorganen erheblich vereinfacht werden, da bei dem erfindungsgemäßen Verfahren die den Herstellungsformen entnommenen Formkörper bereits eine hohe Maßhaltigkeit haben und ggf. nur noch einmal geschnitten werden müssen. In jedem Falle ergibt sich beim erfindungsgemäßen Verfahren kein Verschnitt.

Weiter oben ist bereits dargestellt worden, daß für die Abdichtorgane der in Rede stehenden Lüfterkappen UV-Strahlung ein besonderes Problem ist und daß erfindungsgemäß die UV-Beständigkeit des Abdichtorgans dadurch erheblich erhöht worden ist, daß der Abdichtorgankörper auf wenigstens einer seiner freien Oberflächen, nämlich auf der außenliegenden, der UV-Strahlung ausgesetzten Oberfläche eine diese Oberfläche etwa ganzflächig bedeckende Außenhaut aufweist. Die UV-Beständigkeit läßt sich weiter dadurch erhöhen, daß in der Außenhaut des Abdichtorgankörpers ein UV-beständiger Lack enthalten ist. Herstellungstechnisch geht man dazu vorzugsweise so vor, daß zunächst die Innenflächen der Herstellungsform mit einem Trennwachs versehen werden, daß danach auf die mit dem Trennwachs versehenen Innenflächen der Herstellungsform - vorzugsweise im sogenannten Airless-Verfahren - ein UV-beständiger Lack aufgesprüht wird und daß schließlich die Herstellungsform geschlossen und der Kunststoff und das Blähmittel eingebracht werden.

Weiterhin ist erfindungsgemäß vorgesehen, in einem einzigen Herstellungsvorgang nicht nur das Abdichtorgan sondern auch ein mit dem Abdichtorgan verbundenes Trägerteil bzw. den Lüfterkappenkörper herzustellen. Durch entsprechende Kühlung der Formwände im Bereich des herzustellenden Trägerteils bzw. des Lüfterkappenkörpers ergibt sich in diesem Bereich eine im wesentlichen vollständige Kondensation des Blähmittels. Das erfindungsgemäße Verfahren zur Herstellung eines Abdichtorgans mit einem Trägerteil bzw. einer Lüfterkappe mit einem Lüfterkappenkörper und einem Abdichtorgan jeweils als ein Stück, also als eine Einheit, führt zu einer erheblichen Vereinfachung des Herstellungsprozesses. Außerdem werden Schwierigkeiten, die sich aufgrund einer Klebeverbindung zwischen dem Lüfterkappenkörper und dem Abdichtorgan ergeben können, auf jeden Fall vermieden, da der Lüfterkappenkörper und das Abdichtorgan stoffschlüssig verbunden sind.

Weitere Merkmale, Vorteile und Anwendungsmöglichkeiten der Erfindung ergeben sich aus den weiteren Patentansprüchen, der nachfolgenden Beschreibung von Ausführungsbeispielen anhand der Zeichnung und der Zeichnung selbst. Dabei bilden alle beschriebenen und/oder bildlich dargestellten Merkmale für sich oder in beliebiger Kombination den Gegenstand der vorliegenden Erfindung, unabhängig von ihrer Zusammenfassung in den Patentansprüchen oder deren Rückbeziehung. Es zeigt
Fig.1 im Querschnitt, eine erfindungsgemäße Lüfterkappe mit zwei erfindungsgemäß ausgebildeten Abdichtorganen,
Fig. 2 eine perspektivische Ansicht eines nach dem erfindungsgemäßen Verfahren hergestellten Formkörpers,
Fig. 3 eine perspektivische Ansicht von zwei aus dem Formkörper gemäß Fig. 2 hergestellten Abdichtorganen und
Fig. 4 im Querschnitt, eine weitere Ausführungsform eines erfindungsgemäßen Abdichtorgans.

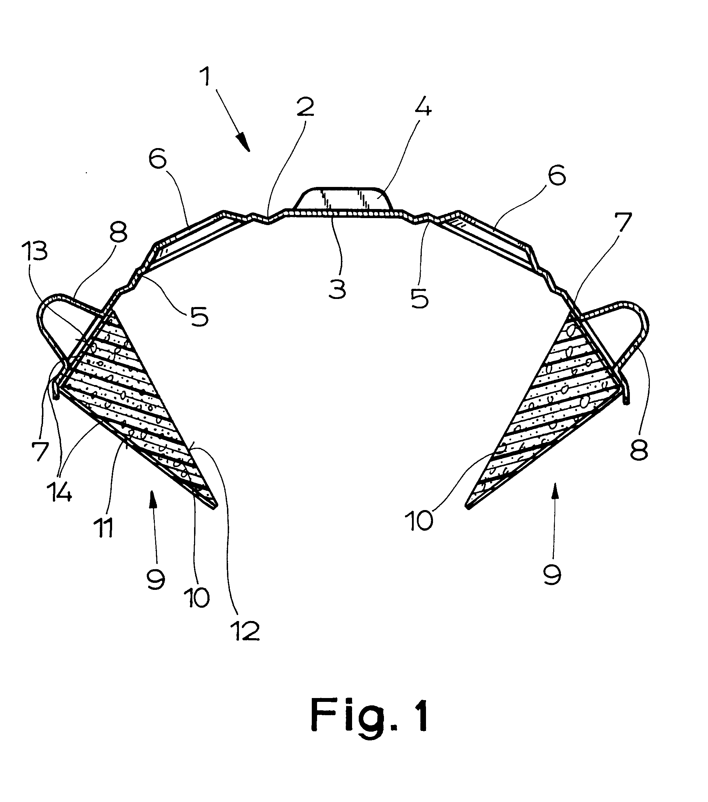

In Fig. 1 ist eine Lüfterkappe 1 dargestellt, die aus Kunststoff besteht und zur Hinterlüftung von Dächern im First-, Walm- oder Gratbereich dient. Die Lüfterkappe 1 weist einen Lüfterkappenkörper 2 auf, der mit einem Befestigungsbereich 3 versehen ist, auf dem sich Auflagehöcker 4 befinden. An den Befestigungsbereich 3 schließt sich jeweils seitlich ein Mittelbereich 5 an, in dem in Fristlängsrichtung eine Mehrzahl von runden oder langgestreckten, vorzugsweise kaminartigen Luftdurchtrittsöffnungen 6 vorgesehen sind. An die Mittelbereiche 5 schließt sich nach außen hin jeweils ein Randbereich 7 an, auf deren Oberseite Abstützhökker 8 vorgesehen sind.

Die Lüfterkappe 1 weist jeweils in ihren Randbereichen 7 ein keilförmiges Abdichtorgan 9 auf, das einen aus Schaumkunststoff bestehenden Abdichtorgankörper 10 aufweist. Das Abdichtorgan 9 ist an der Unterseite des jeweiligen Randbereichs 7 vorgesehen und fest mit diesem verbunden. Im dargestellten Ausführungsbeispiel sind die Abdichtorgane 9 jeweils mit den Randbereichen 7 verklebt.

Der Abdichtorgankörper 10 weist im Querschnitt gesehen drei Oberflächen 11, 12, 13 auf, nämlich eine außenseitige Oberfläche 11, eine innenseitige Oberfläche 12 und eine zur Befestigung am Lüfterkappenkörper 2 dienende Oberfläche 13, die dem Randbereich 7 zugewandt ist. Da das Abdichtorgan 9 im Bereich der Oberfläche 13 mit dem Randbereich 7 des Lüfterkappenkörpers 2 verbunden ist, handelt es sich bei den Oberflächen 11 und 12 um sogenannte freie Oberflächen.

Wesentlich ist nun zunächst, daß der Abdichtorgankörper 10 auf wenigstens einer seiner freien Oberflächen 11, 12 eine im wesentlichen porenfreie, also geschlossene und die Oberflächen 11, 12 etwa ganzflächig bedeckende Außenhaut 14 aufweist. Im dargestellten Ausführungsbeispiel ist die Außenhaut 14 lediglich auf der außenseitigen Oberfläche 11 des Abdichtorgankörpers 10 vorgesehen. Wenn die Außenhaut 14 sowohl auf der außenseitigen Oberfläche 11 als auch auf der innenseitigen Oberfläche 12 vorgesehen ist, ergibt sich ein Abdichtorgan 9 mit einer besonders hervorragenden Abdichtwirkung und hoher Lebensdauer, da selbst bei einer Beschädigung der Aussenhaut 14 auf der außenseitigen Oberfläche 11 aufgrund einer starken Witterungs- oder UV-Strahlungseinwirkung die Abdichtwirkung durch die unbeschädigte, innenseitig angeordnete Außenhaut auf der innenseitigen Oberfläche 12 gewährleistet ist.

Besonders zweckmäßig kann es sein, die Außenhaut 14 auch auf der Oberfläche 13 vorzusehen. Die porenfreie Außenhaut 14 verhindert nämlich, daß beim Auftragen von Klebstoff zum Ankleben des Abdichtorgans 9 an den Lüfterkappenkörper 2 ein Vollsaugen des porösen Abdichtorgankörpers 10 mit Klebstoff stattfindet. Auf diese Weise ergibt sich ein minimaler Klebstoffverbrauch beim Verkleben des Abdichtorgans 9.

Das erfindungsgemäße Abdichtorgan 9 kann wie folgt dargestellt werden:
Kunststoff und Blähmittel werden zusammen als sogenannte Formmasse in flüssiger Form in eine Herstellungsform eingebracht. Dabei handelt es sich vorzugsweise um einen diskontinuierlichen Prozeß, so daß sich der Spritzguß anbietet. Die Herstellungsform ist beim Herstellen geschlossen. Das Blähmittel bewirkt eine Verschäumungsreaktion und führt zur Bildung eines Schaumkunststoffes. Zur Herstellung der erwähnten Außenhaut wird wenigstens eine Formwand der Herstellungsform gekühlt. Die Kühlung kann auf unterschiedliche Art und Weise erfolgen, worauf im einzelnen nicht eingegangen zu werden braucht. Als Folge der Kühlung kondensiert das Blähmittel im Bereich der gekühlten Formwand, wodurch sich auf der an dieser Formwand anliegenden Oberfläche des geschäumten Formkörpers eine im wesentlichen porenfreie Außenhaut bildet, die sich über die gesamte gekühlte Oberfläche des Formkörpers erstreckt. Die Schrumpfung an der gekühlten Außenwand, die sich aufgrund der Kondensation des Blähmittels ergibt, wird durch die sich aufgrund der Verschäumung ergebende Volumenvergrößerung im Innern des geschäumten Formkörpers ausgeglichen, so daß sich nach Beendigung der Verschäumungsreaktion ein die Herstellungsform vollständig ausfüllender Formkörper ergibt, der eine große Maßhaltigkeit aufweist.

An ein Abdichtorgan der genannten Art werden grundsätzlich bestimmte Anforderungen bezüglich der Dichtigkeit und der Flexibilität gestellt. Um nun eine dichte Außenhaut 14 zu erzielen, die die Flexibilität des Abdichtorgans 9 jedoch nicht beeinträchtigt, ist eine gezielte Steuerung der Dicke der Außenhaut 14 erforderlich. Dies kann über eine gezielte, aber im wesentlichen gleichmäßige Einstellung der Temperatur der Außenwand erfolgen. Vorzugsweise beträgt die Dicke der Außenhaut 14, die an jeder Stelle etwa gleich ist, 1tim bis 500 um, insbesondere 10 um. Die Erreichung dieser Werte hängt selbstverständlich nicht nur von der Temperatur der Formwand an sich ab, sondern auch von der Art des verwendeten Kunststoffs bzw. Blähmittels.

Das in Fig. 1 dargestellte Abdichtorgan 9 kann ohne weiteres durch das beschriebene Verfahren hergestellt werden. Durch entsprechende Steuerung und Einstellung der Temperatur einzelner Formwände besteht ohne weiteres die Möglichkeit, auf jeder Oberfläche des Formkörpers oder auch nur an ganz bestimmten Oberflächen eine Außenhaut 14 entstehen zu lassen.

Eine Herstellung des Abdichtorgans 9, bei der nicht einmal ein Schneiden des Formkörpers erforderlich ist, bei der also der fertig geschäumte Formkörper gleich dem Abdichtorgan entspricht, ist dann möglich, wenn die Herstellungsform im Querschnitt der Keilform des Abdichtorgans 9 entspricht. Durch entsprechende Kühlung der drei Oberflächen 11, 12, 13 kann dann den jeweiligen Anforderungen entsprechend auf diesen eine Außenhaut 14 vorgesehen werden.

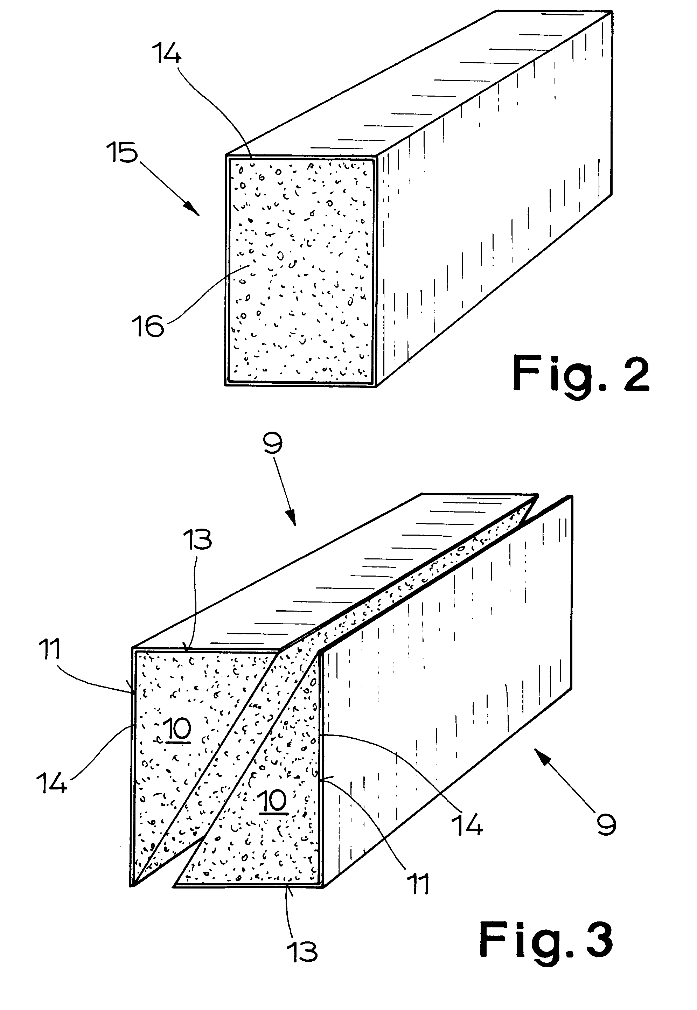

Statt einer im Querschnitt keilförmigen Herstellungsform kann auch eine im Querschnitt etwa rechteckige Herstellungsform verwendet werden. In dieser wird dementsprechend ein rechteckiger Formkörper 15 hergestellt, wie er in Fig. 2 dargestellt ist. Der Formkörper 15 weist einen porösen Kern 16 aus Schaumkunststoff auf. Der Kern 16 wiederum ist auf seiner gesamten äußeren Oberfläche mit einer Außenhaut 14 versehen. Der Formkörper 15 kann eine dem Lüfterkappenkörper 2 entsprechende Länge von beispielsweise 1 m bei einer Breite von beispielsweise 30 mm haben. Die Höhe des Formkörpers 15 kann je nach gewünschter Form des Abdichtorgans 9 variieren. Der fertig geschäumte rechteckige Formkörper 15 wird nach seiner Herstellung entlang einer Diagonalen geteilt, vorzugsweise geschnitten. Auf diese Weise ergeben sich aus einem Formkörper 15 zwei Abdichtorgane 9, die auf der außenseitigen Oberfläche 11 und der zur Befestigung dienenden Oberfläche 13 des Abdichtorgankörpers 10 jeweils eine Außenhaut 14 tragen, was in Fig. 3 dargestellt ist. Selbstverständlich ist es durch entsprechende Steuerung des Herstellungsprozesses auch möglich, den Formkörper 15 derart auszubilden, daß lediglich auf der außenseitigen Oberfläche 11 eine Außenhaut 14 vorgesehen ist.

Als Kunststoff zur Herstellung des erfindungsgemäßen Abdichtorgans 9 eignen sich insbesondere Polystyrol, Styrol-Copolymere, PVC hart und weich, Polycarbonate, Polyolefine, Polyurethane, Polyisocyanurate, Polycarbodiimide, Polymethacrylimide, Polyamide, ABS, Phenol- und Harnstoffharze, Polyethylen, Polypropylen und Polycarbonate. Als Blähmittel können beispielsweise Azo- oder Diazo-Verbindungen verwendet werden.

Nicht dargestellt sind besondere Maßnahmen, die die UV-Beständigkeit des in Rede stehenden Abdichtorgans 9 noch erhöhen. Diese Maßnahmen, denen besondere Bedeutung zukommt, bestehen darin, daß zunächst die Innenflächen der Herstellungsform mit einem Trennwachs versehen werden, daß danach auf die mit dem Trennwachs versehenen Innenflächen der Herstellungsform - vorzugsweise in sogenannten Airless-Verfahren - ein UV-beständiger Lack aufgesprüht wird und daß schließlich die Herstellungsform geschlossen und der Kunststoff und das Blähmittel eingebracht werden.

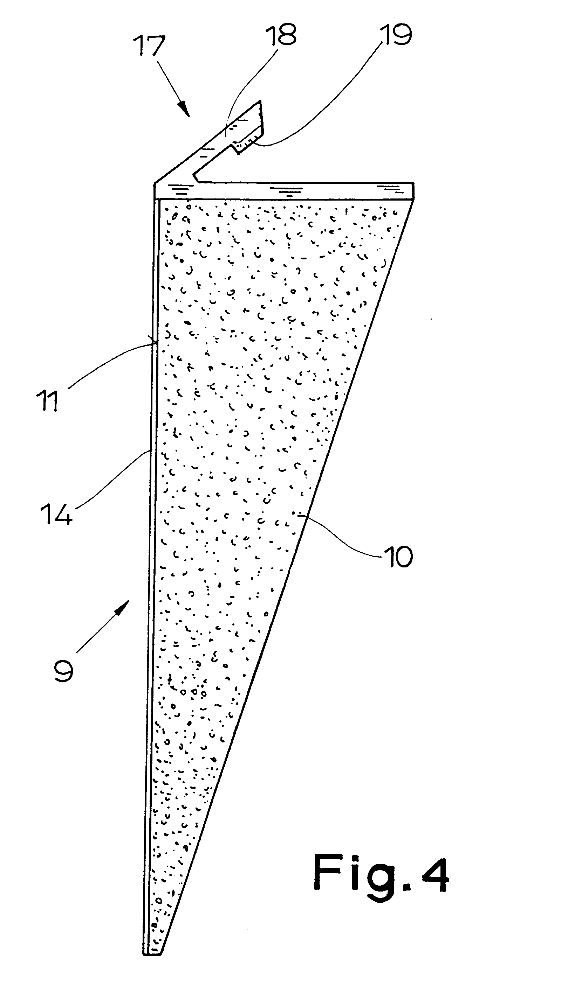

In Fig. 4 ist eine Ausführungsform des Abdichtorgans 9 dargestellt, das auf seiner außenseitigen Oberfläche 11 die Außenhaut 14 trägt. Weiterhin ist das Abdichtorgan 9 mit einem Trägerteil 17 versehen, das zum Aufrasten bzw. Einstecken in eine nicht dargestellte Rast- oder Einschubleiste im Randbereich 7 des Lüfterkappenkörpers 2 gemäß Fig. 1 dient. Hierzu weist das Trägerteil 17 einen abgewinkelten Schenkel 18 mit einer Nase 19 auf, die zum Einrasten bzw. Einstecken dient.

Das in Fig. 4 dargestellte Abdichtorgan 9 kann zusammen, also einteilig mit dem Trägerteil 17 in einem Verfahrensschritt hergestellt werden. Dies wird durch entsprechende Kühlung der Formwände der Herstellungsform im Bereich des herzustellenden Trägerteils 17 erreicht. Die Kühlung kann dabei derart gewählt werden, daß das Blähmittel im Bereich des Trägerteils 17, insbesondere im Bereich des abgewinkelten Schenkels 18 vollständig kondensiert, so daß in diesem Bereich "massiver" Kunststoff vorhanden ist. Hierdurch wird eine ausreichende Festigkeit des Trägerteils 17 erzielt, ohne daß die elastischen und Dichteigenschaften des Abdichtorgans 10 darunter zu leiden hätten.

In Weiterbildung des zuvor beschriebenen Erfindungsgedankens kann nicht nur ein Trägerteil zusammen mit einem Abdichtorgan hergestellt werden, sondern auch ein Lüfterkappenkörper. Durch entsprechende Ausbildung und Kühlung der Formwände im Bereich des Lüfterkappenkörpers kondensiert das Blähmittel in diesem Bereich vollständig, so daß der Lüfterkappenkörper aus "massivem" Kunststoff besteht, der Abdichtorgankörper jedoch nach wie vor aus Schaumkunststoff. Mit dem Lüfterkappenkörper ist das Abdichtorgan also stoffschlüssig verbunden. Eine Lüfterkappe der genannten Art, bei der der Lüfterkappenkörper und das Abdichtorgan aus einem Stück bestehen bzw. aufgrund ihrer Herstellung eine Einheit bilden, vermeidet sämtliche Probleme, die beim Verkleben des Abdichtorgans mit dem Lüfterkappenkörper auftreten können.

Bei der Herstellung einer kompletten Lüfterkappe mit Lüfterkappenkörper und Abdichtorganen ist auf eine entsprechende Wahl des Kunststoffes zu achten. Dieser muß einerseits für den Lüfterkappenkörper eine hohe Festigkeit aufweisen. Andererseits muß der Schaumkunststoff des Abdichtorgankörpers eine hohe Flexibilität aufweisen, um die erforderlichen Dichteigenschaften erbringen zu können.

## Patentansprüche

1. Lüfterkappe (1) zur Hinterlüftung von Dächern im First-, Walm- oder Gratbereich, mit einem - vorzugsweise aus Kunststoff bestehenden - Lüfterkappenkörper (2) und einem Abdichtorgan (9), wobei das Abdichtorgan (9) eine im Querschnitt etwa keilartige Form hat und einen aus Schaumkunststoff bestehenden Abdichtorgankörper (10) aufweist, dadurch gekennzeichnet, daß der Abdichtorgankörper (10) auf wenigstens einer seiner freien Oberflächen (11, 12), vorzugsweise auf der außenliegenden Oberfläche (11), eine im wesentlichen porenfreie und die Oberfläche (11, 12) etwa ganzflächig bedeckende Außenhaut (14) aufweist, die aus einer Strukturveränderung der Oberfläche (11, 12) des Abdichtorgankörpers (10) entstanden ist, aus dem gleichen Kunststoff besteht wie der Abdichtorgankörper (10) und fest mit dem Abdichtorgankörper (10) verbunden ist.

2. Lüfterkappe nach Anspruch 1, dadurch gekennzeichnet, daß der Abdichtorgankörper (10) auf seiner zur Befestigung dienenden Oberfläche (13) ebenfalls eine Aussenhaut (14) aufweist.

3. Lüfterkappe nach Anspruch 1 oder 2, dadurch gekennzeichnet, daß in der Außenhaut (14) des Abdichtorgankörpers (10) ein UV-beständiger Lack enthalten ist.

4. Abdichtorgan (9) für eine - vorzugsweise aus Kunststoff bestehende - Lüfterkappe (1) zur Hinterlüftung von Dächern im First-, Walm-oder Gratbereich, wobei das Abdichtorgan (9) eine im Querschnitt etwa keilartige Form hat und einen aus Schaumkunststoff bestehenden Abdichtorgankörper (10) aufweist, dadurch gekennzeichnet, daß der Abdichtorgankörper (10) auf wenigstens einer seiner freien Oberflächen (11, 12), vorzugsweise auf der außenliegenden Oberfläche (11) eine im wesentlichen porenfreie und die Oberfläche (11, 12) etwa ganzflächig bedeckende Außenhaut (14) aufweist, die aus einer Strukturveränderung der Oberfläche (11, 12) des Abdichtorgankörpers (10) entstanden ist, aus dem gleichen Kunststoff besteht wie der Abdichtorgankörper (10) und fest mit dem Abdichtorgankörper (10) verbunden ist.

5. Lüfterkappe (1) zur Hinterlüftung von Dächern im First-, Walm- oder Gratbereich, mit einem - vorzugsweise aus Kunststoff bestehenden - Lüfterkappenkörper (2) und einem Abdichtorgan (9), wobei das Abdichtorgan (9) eine im Querschnitt etwa keilartige Form hat und einen aus Schaumkunststoff bestehenden Abdichtorgankörper (10) aufweist, dadurch gekennzeichnet, daß das Abdichtorgan (9) lösbar mit dem Lüfterkappenkörper (2) verbindbar ist.

6. Abdichtorgan nach Anspruch 5, gekennzeichnet durch ein Trägerteil (17), daß mit dem Abdichtorgankörper (10) fest verbunden und mit dem Lüfterkappenkörper (2) lösbar verbindbar ist.

7. Lüfterkappe nach Anspruch 5 oder 6, dadurch gekennzeichnet, daß das Trägerteil (17) eine im Querschnitt etwa winklige, vorzugsweise spitzwinklige Form hat und daß an einem ersten Winkelschenkel der Abdichtorgankörper (10) befestigt ist, während der zweite Winkelschenkel (18) lösbar mit dem Lüfterkappenkörper (2) verbindbar ist, wobei vorzugsweise die Breite des ersten Winkelschenkels etwa der Breite der zugeordneten Seite des Abdichtorgankörpers (10) entspricht und/oder der zweite Winkelschenkel (18) mit dem Lüfterkappenkörper (2) verrastbar und/oder in den Lüfterkappenkörper (2) einschiebbar ist, vorzugsweise dazu eine Nase (19) aufweist.

8. Verfahren zur Herstellung einer Lüfterkappe bzw. eines Abdichtorgans für eine Lüfterkappe, nach einem der Ansprüche 1 bis 7, dadurch gekennzeichnet, daß Kunststoff und Blähmittel als Formmasse in eine Herstellungsform eingebracht werden, eine Verschäumung unter Bildung von Schaumkunststoff erfolgt und mindestens eine Formwand der Herstellungsform derart gekühlt wird, daß das Blähmittel im Bereich der gekühlten Formwand kondensiert und sich auf der an der gekühlten Formwand anliegenden Oberfläche des geschäumten Formkörpers eine im wesentlichen geschlossene, sich an der entsprechenden Oberfläche des Formkörpers ganzflächig erstreckende Außenhaut bildet.

9. Verfahren nach Anspruch 8, dadurch gekennzeichnet, daß die Formwand in Abhängigkeit vom verwendeten Kunststoff und Blähmittel derart gekühlt wird, daß sich eine Dicke der Außenhaut von 1 bis 500 um, vorzugsweise von 10 um, ergibt.

10. Verfahren nach Anspruch 8 oder 9, dadurch gekennzeichnet, daß in der Herstellungsform ein der Keilform des Abdichtorgans oder ein im Querschnitt etwa rechteckiger Formkörper hergestellt wird.

11. Verfahren nach einem der Ansprüche 8 bis 10, dadurch gekennzeichnet, daß als Kunststoff zur Herstellung des Abdichtorgans Polystyrol, Styrol-Copolymere, PVC hart und weich, Polycarbonate, Polyolefine, Polyurethane, Polyisocyanurate, Polycarbodiimide, Polymethacrylimide, Polyamide, ABS, Phenol- und Harnstoffharze, Polyethylen, Polypropylen und/oder Polycarbonate und/oder als Blähmittel Azo- oder Diazo-Verbindungen verwendet werden.

12. Verfahren nach einem der Ansprüche 8 bis 11, dadurch gekennzeichnet, daß zunächst die Innenflächen der Herstellungsform mit einem Trennwachs versehen werden, daß danach auf die mit dem Trennwachs versehenen Innenflächen der Herstellungsform - vorzugsweise im sogenannten Airless-Verfahren - ein UV-beständiger Lack aufgesprüht wird und daß schließlich die Herstellungsform geschlossen und der Kunststoff und das Blähmittel eingebracht werden.

13. Verfahren nach einem der Ansprüche 8 bis 12, dadurch gekennzeichnet, daß in der Herstellungsform gleichzeitig ein mit dem Abdichtorgan verbundenes Trägerteil hergestellt wird und daß die Formwände im Bereich des herzustellenden Trägerteils derart gekühlt werden, daß das Blähmittel im Bereich des Trägerteils im wesentlichen vollständig kondensiert.

14. Verfahren nach einem der Ansprüche 8 bis 13, dadurch gekennzeichnet, daß in der Herstellungsform gleichzeitig auch der Lüfterkappenkörper hergestellt wird und daß die Formwände im Bereich des herzustellenden Lüfterkappenkörpers derart gekühlt werden, daß das Blähmittel im Bereich des Lüfterkappenkörpers im wesentlichen vollständig kondensiert, während sich im Bereich des Abdichtorgankörpers des Abdichtorgans ein Schaumkunststoff bildet.
